Europäisches Patentamt

European Patent Office

Office européen des brevets

(11) Veröffentlichungsnummer: **0 089 917**

A1

## (12) EUROPÄISCHE PATENTANMELDUNG

(21) Anmeldenummer: 83730023.5

(22) Anmeldetag: 02.03.83

(51) Int. Cl.³: **B 65 G 51/20**

(30) Priorität: 18.03.82 DE 3210226

(43) Veröffentlichungstag der Anmeldung:
28.09.83 Patentblatt 83/39

(84) Benannte Vertragsstaaten:
AT CH DE FR GB LI

(71) Anmelder: SIEMENS AKTIENGESELLSCHAFT
Berlin und München Wittelsbacherplatz 2
D-8000 München 2(DE)

(72) Erfinder: Kardinal, Hans-Joachim, Ing. grad.
Am Waldhaus 27
D-1000 Berlin 38(DE)

(72) Erfinder: Dechandt, Manfred
Gollanczstrasse 116
D-1000 Berlin 28(DE)

(54) Rohrpostanlage mit einem im Wendebetrieb befahrenen Fahrrohr.

(57) In einem an die letzte Rohrpoststation eines Fahrrohres (11) anschließenden Fahrrohrabschnitt (1) wird eine Rohrpostbüchse zum Stillstand gebracht und anschließend in ihrer Bewegungsrichtung umgekehrt. Innerhalb des Fahrrohrabschnittes (1) befindet sich ein erstes Rückschlagventil (4) und hinter ihm eine erste Rohrmantelöffnung (2); in einem wenigstens eine Rohrpostbüchsenlänge betragenden Abstand vor ihm befindet sich eine zweite Rohrmantelöffnung (3) mit einem außerhalb des Rohrmantels gelegenen zweiten Rückschlagventil (6). Der Bereich der Rohrmantelöffnungen (2, 3) ist von einer stirnseitig geschlossenen Rohrkammer (8) umgeben. Eine ankommende Rohrpostbüchse wird dadurch pneumatisch gebremst empfangen und anschließend wieder in das Fahrrohr (11) zurückgeführt.

EP 0 089 917 A1

SIEMENS AKTIENGESELLSCHAFT
Berlin und München

Unser Zeichen **0089917**
VPA 82 P 4037 E

Rohrpostanlage mit einem im Wendebetrieb befahrenen Fahrrohr
_____

Die Erfindung betrifft eine Rohrpostanlage mit wenigstens
einem im Wendebetrieb befahrenen Fahrrohr, entlang dessen
derart als Sende-, Empfangs- und Durchgangsstationen ausgebildete Rohrpoststationen angeordnet sind, daß nur in
einer der beiden Einfahrrichtungen ankommende Rohrpostbüchsen empfangen und ausgeschleust werden können, die in
der anderen Einfahrrichtung ankommenden Rohrpostbüchsen dagegen die Rohrpoststation durchfahren und in einem an die
Rohrpoststation anschließenden, an seinem Ende mit Außenluft  oder einem Gebläse verbundenen Fahrrohrabschnitt angehalten und durch Umkehr der Förderluftrichtung zurückbefördert werden.

Bei in der Praxis ausgeführten Rohrpostanlagen sind an den
Fahrrohrabschnitt zwei Luftleitungen mit je einem Ventil
angeschlossen. Bei Einfahrt der Rohrpostbüchse in den Fahrrohrabschnitt wird die Förderluft durch die der letzten
Rohrpoststation im Fahrrohr nähere Luftleitung geführt; nach
Passieren der Anschlußstelle der Luftleitung ist die
Rohrpostbüchse antriebslos und kommt nach einer gewissen
Nachlaufstrecke zum Stillstand. Durch Änderung der
Laufrichtung des Gebläses bzw. bei Beibehaltung der
Laufrichtung des Gebläses durch Umschaltung entsprechender
Ventilkombinationen wird die Richtung der Förderluft
anschließend umgekehrt; die Förderluft tritt durch den
weiter entfernt von der letzten Rohrpoststation des
Fahrrohres angeschlossenen Luftzutritt in den
Fahrrohrabschnitt ein, wodurch die Rohrpostbüchse wieder in
das Fahrrohr zurückbefördert wird.

Om 3 Sz / 16.03.1982

Die der Erfindung zugrunde liegende Aufgabe besteht darin,
den konstruktiven Aufwand und den Raumbedarf für den Fahrrohrabschnitt bzw. die vorzunehmende Umkehr der Förderluftrichtung zu verringern. Dies wird erfindungsgemäß
dadurch erreicht, daß in dem Fahrrohrabschnitt ein bei Einfahren einer Rohrpostbüchse in diesen geschlossenes erstes
Rückschlagventil und hinter ihm eine erste Rohrmantelöffnung
sowie in einem wenigstens eine Rohrpostbüchsenlänge betragenden Abstand vor ihm eine zweite Rohrmantelöffnung mit
einem bei Einfahren der Rohrpostbüchse in den Fahrrohrabschnitt die zweite Rohrmantelöffnung freigebenden zweiten
Rückschlagventil angeordnet ist und daß der Fahrrohrabschnitt in einem, beide Rohrmantelöffnungen umfassenden Bereich in eine gegen Außenluft abgeschlossene Kammer eingefügt ist.

Der wesentliche Vorteil der Erfindung ist darin zu sehen,
daß der Fahrrohrabschnitt nur eine einzige Verbindung zu
einem Gebläse bzw. zur Außenluft aufweist, wobei die
Verlängerung des Fahrrohrabschnittes selbst die Verbindung
darstellen kann. Es kann also auf zusätzliche Rohranschlüsse
verzichtet werden. Darüberhinaus ist die gesamte Einrichtung
zur Umkehrung der Förderluftrichtung in dem Fahrrohrabschnitt konstruktiv außerordentlich einfach aufgebaut und
stellt eine leicht zu montierende kompakte Baueinheit dar.

Das erste Rückschlagventil kann dabei durch ein handelsübliches Ventil realisiert werden, das in den Innenraum des
Fahrrohrabschnittes eingefügt wird. Der Fahrrohrabschnitt
kann zu diesem Zweck an der entsprechenden Stelle aufgetrennt werden. Um das Rückschlagventil vor Beschädigungen
durch das Auftreffen von Rohrpostbüchsen zu schützen, wird
gemäß einer vorteilhaften Weiterbildung der Erfindung in
unmittelbarer Nachbarschaft vor dem ersten Rückschlagventil ein das Weiterfahren einer Rohrpostbüchse unterbindender
Anschlag angeordnet.

Da in den Fahrrohrabschnitt einfahrende Rohrpostbüchsen den
Bereich des zweiten Rückschlagventils überfahren müssen,
wird das zweite Rückschlagventil außerhalb des Fahrrohrabschnittes angebracht. In diesem Zusammenhang ist als
vorteilhaft anzusehen, daß das zweite Rückschlagventil als
außerhalb des Rohrmantels angeordnete flexible Dichtung
ausgebildet ist, die bei Umkehr der Förderluftrichtung an
die zweite Rohrmantelöffnung angepreßt ist. Die flexible
Dichtung kann dabei beispielsweise durch eine den Rohrmantel
konzentrisch umgebende Manschette gebildet sein, die
einseitig eingespannt ist. Die Rohrmantelöffnung braucht
dabei nicht unbedingt durch eine einzige Ausnehmung
innerhalb des Rohrmantels, sondern kann auch durch mehrere -
insbesondere gleichmäßig verteilte - Löcher im Rohrmantel
gebildet sein.

Eine bevorzugte Ausführungsform für die Kammer sieht vor,
daß die Kammer als den Fahrrohrabschnitt konzentrisch umgebendes Rohr ausgebildet ist, dessen Stirnflächen in dem
Bereich außerhalb des Rohrmantels des Fahrrohrabschnitts
abgeschlossen sind.

Die Erfindung wird im folgenden anhand figürlich dargestellten Ausführungsbeispiels erläutert.

Ein Fahrrohrabschnitt 1 stellt eine Verbindung zu einem
Fahrrohr 11 mit mehreren Rohrpoststationen und zu einer
Luftleitung 12 dar, die an ein - nicht dargestelltes -
Gebläse angeschlossen ist. Im Zuge des Fahrrohres 11 liegen
Rohrpoststationen, die derart ausgebildet sind, daß nur
solche Rohrpostbüchsen empfangen und ausgeschleust werden
können, die aus der Richtung des Fahrrohrabschnittes 1
kommend in die Rohrpoststation eintreten.

Der Fahrrohrabschnitt 1 weist eine erste Rohrmantelöffnung 2 und eine zweite Rohrmantelöffnung 3 auf. Der Rohrmantelöffnung 2 vorgelagert befindet sich ein Rückschlagventil 4, das federnd auf einer Anschlagplatte 5 abgestützt ist.

Der Rohrmantelöffnung 3 ist eine flexible Dichtung 6 zugeordnet, die mittels eines Einspannringes 7 auf dem Rohrmantel des Fahrrohrabschnitts 1 befestigt ist. Der Fahrrohrabschnitt 1 ist in einem die beiden Rohrmantelöffnungen 2, 3 umfassenden Bereich von einer Rohrkammer 8 umgeben, die mittels Abdeckplatten 9, 10 stirnseitig verschlossen ist.

Die Betriebsweise der dargestellten Einrichtung ist derart, daß eine Rohrpostbüchse in den Fahrrohrabschnitt 1 mittels einer Luftströmung befördert wird, die vom Fahrrohr 11 in Richtung auf den Fahrrohrabschnitt 1 verläuft, durch die Rohrmantelöffnung 3 in den Innenraum der Rohrkammer 8 eintritt, den Innenraum der Rohrkammer 8 durch die Rohrmantelöffnung 2 wieder verläßt und durch die Luftleitung 12 in die Saugluftseite eines - nicht dargestellten - Gebläses eintritt. Sobald die ankommende Rohrpostbüchse den Bereich der Rohrmantelöffnung 3 passiert hat, wirkt keine antreibende Förderluft mehr auf sie ein und die Rohrpostbüchse kommt durch das sich vor ihr infolge des geschlossenen Rückschlagventils 4 aufbauende Luftpolster pneumatisch abgebremst auf dem Anschlag 5 zum Stillstand.

Bei Umschalten des Gebläses bzw. einer - ebenfalls nicht dargestellten - dem Gebläse vorgeschalteten Ventilkombination, wird Druckluft an die Luftleitung 12 gelegt. Der damit im Innenraum der Rohrkammer 8 gegenüber dem Fahrrohrabschnitt 1 auftretende Überdruck führt zum Schließen der flexiblen Dichtung 6 und zum Öffnen des Rückschlagventils 4. Die Luftströmung wird daher durch die Luftleitung 12 und den Fahrrohrabschnitt 1 in das Fahrrohr 11 ge-

**0089917**

führt, wodurch die Rohrpostbüchse von dem - luftdurchlässigen - Anschlag 5 in Richtung auf die im Zuge des Fahrrohres 1 liegenden Stationen befördert wird.

1 Figur

5 Patentansprüche

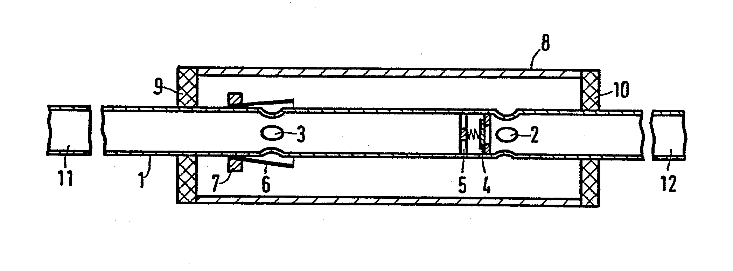

Patentansprüche

1. Rohrpostanlage mit wenigstens einem im Wendebetrieb
befahrenen Fahrrohr, entlang dessen derart als Sende-,
Empfangs- und Durchgangsstationen ausgebildete Rohrpoststationen angeordnet sind, daß nur in einer der beiden Einfahrrichtungen ankommende Rohrpostbüchsen empfangen und ausgeschleust werden können, die in der anderen Einfahrrichtung
ankommenden Rohrpostbüchsen dagegen die Rohrpoststation
durchfahren und in einem an die Rohrpoststation anschließenden, an seinem Ende mit Außenluft oder einem Gebläse verbundenen Fahrrohrabschnitt angehalten und durch Umkehr der
Förderluftrichtung zurückbefördert werden , d a d u r c h
g e k e n n z e i c h n e t , daß in dem Fahrrohrabschnitt
(1) ein bei Einfahren einer Rohrpostbüchse in diesen
geschlossenes erstes Rückschlagventil (4) und hinter ihm
eine erste Rohrmantelöffnung (2) sowie in einem wenigstens
eine Rohrpostbüchsenlänge betragenden Abstand vor ihm eine
zweite Rohrmantelöffnung (3) mit einem bei Einfahren der
Rohrpostbüchse in den Fahrrohrabschnitt (1) die zweite Rohrmantelöffnung (3) freigebenden zweiten Rückschlagventil (6)
angeordnet ist und daß der Fahrrohrabschnitt (1) in einem
beide Rohrmantelöffnungen (2, 3) umfassenden Bereich in eine
gegen Außenluft abgeschlossene Kammer (8) eingefügt ist.

2. Rohrpostanlage nach Anspruch 1 , d a d u r c h   g e -
k e n n z e i c h n e t , daß in unmittelbarer Nachbarschaft
vor dem ersten Rückschlagventil (4) ein das Weiterfahren
einer Rohrpostbüchse unterbindender Anschlag (5) angeordnet
ist.

3. Rohrpostanlage nach Anspruch 1 oder 2 , d a d u r c h
g e k e n n z e i c h n e t , daß das zweite Rückschlagventil (6) als außerhalb des Rohrmantels angeordnete
flexible Dichtung ausgebildet ist, die bei Umkehr der Förderluftrichtung an die zweite Rohrmantelöffnung (3) angepreßt ist.

4. Rohrpostanlage nach einem der Ansprüche 1 bis 3 , d a d u r c h   g e k e n n z e i c h n e t , daß die erste und/oder die zweite Rohrmantelöffnung (2, 3) durch jeweils mehrere Löcher im Rohrmantel gebildet sind.

5. Rohrpostanlage nach einem der Ansprüche 1 bis 4 , d a d u r c h   g e k e n n z e i c h n e t , daß die Kammer (8) als den Fahrrohrabschnitt (1) konzentrisch umgebendes Rohr ausgebildet ist, dessen Stirnflächen in den Bereichen außerhalb des Rohrmantels des Fahrrohrabschnitts (1) abgeschlossen sind.

## EUROPÄISCHER RECHERCHENBERICHT

Europäisches
Patentamt

EP 83 73 0023

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 315 463 (SAUNIER-DUVAL) <br> * Seite 4, Zeilen 29-36; Figuren * | 1 | B 65 G 51/20 |
| A | DE-A-2 745 223 (GIRSCHOVITSCH) <br> * Seite 19, Zeile 15 - Seite 20, Zeile 10; Figuren * | 1 | |
| A | DE-A-1 938 520 (AUF NAMEN DES ANMELDERS) <br> * Anspruch 1 * | 4,5 | |

RECHERCHIERTE
SACHGEBIETE (Int. Cl. 3)

B 65 G

Der vorliegende Recherchenbericht wurde für alle Patentansprüche erstellt.

| Recherchenort <br> DEN HAAG | Abschlußdatum der Recherche <br> 20-06-1983 | Prüfer <br> VAN ROLLEGHEM F.M. |
|---|---|---|